# EUROPÄISCHE PATENTSCHRIFT

(11) **EP 1 085 805 B1**
(45) Veröffentlichungstag und Bekanntmachung des Hinweises auf die Patenterteilung: **13.02.2002**
(21) Anmeldenummer: 99927852.6
(22) Anmeldetag: 02.06.1999
(51) Int. Cl.: A01N 37/36, A01N 31/02, A01N 37/04, A01N 37/06, A01N 37/42

(54) **VERWENDUNG MINDESTENS EINER SÄURE DES ZITRONENSÄURE-KREISLAUFS IN KOMBINATION MIT GLYCERIN ALS SCHÄDLINGSBEKÄMPFUNGSMITTEL**
USE OF AT LEAST ONE ACID FROM THE CITRIC ACID CYCLE COMBINED WITH GLYCERINE AS A PESTICIDE
UTILISATION D'AU MOINS UN ACIDE DU CYCLE ACIDE CITRIQUE EN COMBINAISON AVEC DE LA GLYCERINE, COMME AGENT DE LUTTE CONTRE LES PARASITES

(30) Priorität: 08.06.1998 DE 19825605
(43) Veröffentlichungstag der Anmeldung: 28.03.2001
(73) Patentinhaber: Biolink Technologies AG, 8212 Neuhausen am Rheinfall (CH)
(72) Erfinder: BENCSITS, Franz, CH-8053 Zürich (CH)
(74) Vertreter: Grünecker, Kinkeldey, Stockmair & Schwanhäusser Anwaltssozietät
(86) Internationale Anmeldenummer: EP9903835
(87) Internationale Veröffentlichungsnummer: WO9963818

(56) Entgegenhaltungen:
- WO-A1-92/05699
- WO-A1-95/31100
- DE-C1- 19 812 927
- FR-A1- 2 634 103

## Beschreibung

Die vorliegende Erfindung betrifft ein Schädlingsbekämpfungsmittel gegen fliegende, kriechende, stechende, beißende und saugende Schädlinge und Lästlinge der Ordnung Gliedertiere (Arthropoden), insbesondere der Klassen Insekten, Spinnentiere, Hundertfüßer, Tausendfüßer, Doppelfüßer und Asseln.

Schädlingsbekämpfungsmittel sind Substanzen, die dazu bestimmt sind, Schädlinge und Schadorganismen unschädlich zu machen. Mittel gegen die oben genannten Arten werden Insektizide bzw. Acarizide genannt. Chemisch unterscheidet man zwischen natürlichen und synthetischen Insektiziden. Zu den natürlichen Insektiziden gehören die Rotenoide, wie Deguelin, Tephrosin, Toxicarol, Ellipton und Sumatrol, welche aus tropischen Derris-, Lonchocarpus-, Pachyrrhizus- und Tephrosiaarten gewonnen werden, aber den Nachteil aufweisen, als Furocumarine (Pfeilgift) auch auf Warmblüter enorme toxische Wirkungen zu entfalten. Weiterhin natürliche Insektizide sind die Alkaloide (z.B. Nicotin) und aus Bakterien isolierte Endotoxine, die ebenfalls hohe Risiken für den warmblütigen Anwender darstellen, weiterhin die Pyrethroide des Pyrethrums (Pyrethrin, Cinerin und Jasmolin), die in den letzten Jahren ebenfalls Eingang in die Diskussion über toxikologische Risiken gefunden haben.

Die synthetischen Insektizide lassen sich in anorganische und organische Verbindungen unterteilen. Anorganische Insektizide sind z.B. Arsenpräparate, Kryolith, Fluorsilikate, Na-fluorid, Cyanwasserstoff, Phosphorwasserstoff und Sulfurylfluorid über deren Anwendungsnachteile und gesundheitliche Bedenklichkeit bereits vor längerer Zeit ein endgültiges, negatives Urteil gefällt wurde. Organische Insektizide sind z.B. Chlorkohlenwasserstoffe, wie DDT. Aldrin, Dieidrin, Chlordan, Lindan, Heptachlor und Toxaphen. Diese Verbindungen sind persistent und reichem sich auf Grund ihrer guten Fettlöslichkeit meist im Fettgewebe von Warmblütern an. Auch hier ist man inzwischen zu einer überwiegend negativen Einschätzung gelangt. Weiterhin bekannte Insektizide sind Phosphorsäureester, wie E 605, mit den Nachteilen ihrer hohen Warmblütertoxizität, Carbamate, wie Carbaryl, Carbofuren und Propoxur, sowie synthetische Pyrethroide, wie Cypermethrin, Cyfluthrin, Cyhalothrin, Deltamethrin, Fenpropathrin, Permethrin, Tralomethrin, Phenothrin, Resmethrin, Tetramethrin, Allethrin, Fenvalerat, Etofenprox u. v. a. m. mit allen bisher bekannt gewordenen Nebenwirkungen als nachgewiesene Nervengifte.

Die Nachteile aller bisher bekannten, natürlichen und synthetischen Insektizide sind einmal ihre unterschiedliche, aber bei allen Substanzen vorhandene Toxizität gegen Menschen und Warmblüter (Säugetiere, Vögel). Zum anderen haben viele Schädlinge die Fähigkeit, in raschem Generationswechsel Resistenzen gegen die verschiedenen Wirkstoffe zu entwickeln, da auch bei der sorgfältigsten Behandlungsmethode niemals ausgeschlossen werden kann, daß einzelne Exemplare Insektiziddosen, die nicht tödlich sind, abbekommen. Diese Exemplare können sich durch enzymatische Oxidation schnell entgiften und dieses Vermögen in der Erbinformation an ihre Nachkommen weitergeben. Die nachfolgenden Populationen werden so gegen das Insektizid immun (resistent).

Dieser Effekt kann durch Zugabe von sogenannten Synergisten, wie dem bekannt cancerogenen Piperonylbutoxid oder hochtoxischen Phosphorsäureestem oder Carbamaten, gemildert werden. Eine solche Kombination zeigt jedoch immer noch die gefährlichen Wirkungen gegen Warmblütler.

Aufgrund dieser Nachteile wurden verschiedene ökologisch und toxikologisch unbedenklichere Insektizide vorgeschlagen.

So offenbaren die JP-A-63-297303, die JP-A-04-250804, die DE-A-4233806, die WO-A-9531100 sowie die US-A-5489433 insektizide Zusammensetzungen, die auf Carbonsäuren, beispielsweise Zitronensäure, basieren.

Die WO-A-9205699 sowie die JP-A-02-142704 beschreiben insektizide Zusammensetzungen, die als aktive Substanz polyvalente Alkohole bzw. Monoester von polyvalenten Alkoholen enthalten.

Die Insektizide, die auf toxikologisch unbedenklichen Substanzen beruhen, zeigen allerdings im Vergleich zu den herkömmlichen Substanzen häufig eine unzulängliche Wirksamkeit.

Demgemäß liegt der vorliegenden Erfindung die Aufgabe zugrunde, ein wirksames Schädlingsbekämpfungsmittel auf Basis natürlicher und/oder naturidenter Wirkstoffe mit geringstem toxikologischen Risiko zur Verfügung zu stellen, das für den Menschen und seine Lebensumgebung (Haustiere, Nahrungsmittel, kontaminierte Flächen und Gegenstände) auch bei exzessiver Falschanwendung gefahrlos verwendbar ist, nicht persistent ist, also schnell und ohne Bildung schädlicher Metaboliten biologisch abbaubar ist und bei den Zieltieren auch bei Anwendung nicht tödlicher Dosen keine Resistenzentwicklung ermöglicht, und zudem trotz dieser Vorgaben eine genügend lange Wirkungsdauer aufweist, um Befall an Schädlingen restlos zu tilgen.

Diese Aufgabe wird erfindungsgemäß durch die Verwendung mindestens einer Säure des Zitronensäure-Kreislaufs in Kombination mit Glycerin gelöst.

Die Säuren des Zitronensaure-Kreisiaufs sind Oxalessigsäure, Glutarsäure, Zitronensäure, Oxalsäure, Itaconsäure, Bemsteinsäure, Fumarsäure und L-Äpfelsäure. Von diesen ist Zitronensäure bevorzugt.

Die Säuren des Zitronensäure-Kreislaufs werden im folgenden einfach Säuren genannt.

Zitronensäure (2-Hydroxy-1,2,3-propantricarbonsäure) mit der Struktur 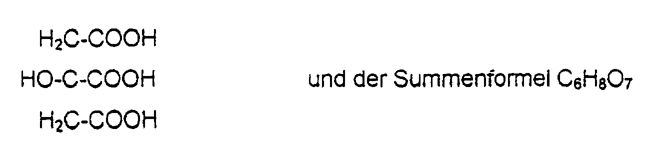 hat wasserfrei ein Molekulargewicht von 192,12 und kann natürlicher oder synthetischer Herkunft sein. Üblicherweise liegt Zitronensäure mit verschiedenen Kristallwassergehalten, vom Monohydrat (C₇ H₈ O₇. H₂O) bis zum 7-hydrat (C₆ H₈ O₇. 7H₂O), vor. Die natürliche Zitronensäure wird aus Zitronensaft durch Ausfällen mit Kalkmilch und nachfolgender Zerlegung des Calciumcitrats mittels Schwefelsäure in Calciumsulfat und freie Zitronensäure hergestellt. Die gebräuchlichste Synthesenmethode ist das Submersverfahren, nach dem Zitronensäure biotechnologisch in der mikrobiellen Kulturtechnik hergestellt wird. Weitere Methoden der Zitronensäuresynthese sind das Oberflächenfahren und andere Fermentationsverfahren, die aber technisch nur mehr eine untergeordnete Rolle spielen.

Zitronensäure gehört zu den verbreitetsten Pflanzensäuren und wurde in zahlreichen Früchten, Milch, Nadelhölzem, Orchideen, Rübensaft, Pilzen, Tabakblättern, Wein usw. nachgewiesen. Besonders reich ist Zitronensaft, der ca. 5 bis 7% Zitronensäure aufweist. Da die Zitronensäure regelmäßig im Zitronensäure-Zyklus als Zwischenprodukt bei der Oxidation von Fetten, Kohlenhydraten und Aminosäuren auftritt, ist sie in allen Organismen in kleinen Mengen zu finden. Ihre physiologische und toxikologische Unbedenklichkeit auf Menschen und Warmblüter, sowie Vögel und Fische wird eindrucksvoll dadurch dokumentiert, daß z.B. im Zitronensäure-Zyklus eines erwachsenen Menschen täglich insgesamt ca. 2000 g Zitronensäure als energiereiches Zwischenprodukt gebildet und wieder abgebaut werden. Ein relativ hoher Zitronensäuregehalt findet sich dauerhaft im Knochensystem aller Säugetiere und Vögel.

Nachgewiesenermaßen nehmen insbesondere Menschen, aber auch pflanzenfressende Arten von Säugetieren und Vögeln, mit der täglichen Nahrung (Obst, Gemüse, Fruchtsäfte etc.) schadlos ein Vielfaches jener Menge an Zitronensäure auf, als je bei einem noch so massiven Ingestionsfall bei Anwendung des erfindungsgemäßen Schädlingsbekämpfungsmittels oral, dermal oder inhalativ aufgenommen werden könnte. Der LD₅₀ Wert Ratte oral von Zitronensäure liegt über 20.000 mg/kg Körpergewicht, während er bei Carbaryl (1-Naphtyl-methylcarbamat) 300 mg/kg, bei Lindan 88 mg/kg sowie bei Dieldrin als Vertreter der Phosphorsäureester 56 mg/kg Körpergewicht beträgt Phosphorsäureester, wie Azinphos, Malathion oder Parathion, besitzen zudem die gleiche Struktur wie die Kampfstoffe und Nervengifte Sarin, Tabun und Soman und haben sich als carcinogen-verdächtig und als mutagen herausgestellt.

Glycerin (1,2,3-Propantriol) mit der Struktur 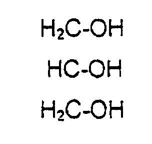 und der Summenformel C₃H₈O₃ ist eine klare, farblose, schwer bewegliche, geruchslose und süß schmeckende hygroskopische Flüssigkeit mit einem Molekulargewicht von 92. Glycerin kann natürlicher oder synthetischer Herkunft sein.

Glycerin ist in tierischen Fetten und pflanzlichen Ölen außerordentlich verbreitet und wird mittels Verseifung daraus abgespalten. Synthetisches Glycerin wird ausgehend von Propen über die Zwischenstufen Allylchlorid oder Allylalkohol hergestellt. Glycerin kommt auch im Blut einiger Insekten vor. Aufgrund der darauf basierenden Gefrierschutzwirkung überleben beispielsweise arktische Laufkäfer Temperaturen von bis zu -85°C. Der LD₅₀-Wert von Glycerin liegt bei über 20.000 mg/kg Körpergewicht (Ratte, oral). Glycerin ist daher ohne toxische Risiken anwendbar.

Die oben erwähnten Risiken der herkömmlichen Insektizide können bei der erfindungsgemäßen Verwendung mindestens eine Säure des Zitronensäure-Kreislaufs in Kombination mit Glycerin vollständig ausgeschlossen werden. Als weiterer gravierender Unterschied und Vorteil gegenüber allen anderen bekannten Insektiziden erweist sich die vollständige Wasserlöslichkeit der Kombination, da damit auf den Einsatz ebenfalls toxikologisch und ökologisch bedenklicher Rezepturbestandteile und Hilfsmittel, wie Lösungsmittel (organische, halogenierte usw.), Kohlenwasserstoffe und Emulgatoren, völlig verzichtet werden kann, was insbesondere bei der Schädlingsbekämpfung in Landwirtschaft und Gartenbau folgende Vorteile der erfindungsgemäßen Verwendung ergibt:
1. Das völlige Fehlen von Phytotoxizität auf chlorophyllhaltige Pflanzenteile, wie sie durch Einwirkung von Emulgatoren bei allen anderen Mitteln immer wieder auftritt und als Folge Ernteausfälle und Absterben von mehrjährigen Nutzpflanzen auslöst.
2. Durch vollständigen, schnellen biologischen Abbau ohne schädlicher Metabolitenbildung völlig gefahrlose Anwendung der Zitronensäure ohne Beeinträchtigung und Gefährdungspotential auf Luft, Erde und Wasser.
3. Ausschluß jeder Gefährdung durch Kontamination von Feld- und Gartenfrüchten auf Fruchtgenießer, wie Menschen und Tiere.
4. Keine Resistenzentwicklung; daher ist immer ein Einsatz in Minimaldosierung gewährleistet und kein Wrkstoffwechsel bei Auftreten resistenter Populationen notwendig.

Ebenso neu ist der Wirkmechanismus, auf dem die erfindungsgemäße Verwendung der Kombination beruht. Da sie weder ein Nervengift (Pyrethroide) noch einen Acetylcholinesterasehemmer, wie die Phosphorsäureester und die Carbamate, darstellt, sondem als reines Kontakt- und Fraßgift direkt in den Zitronensäure-Zyklus der Schädlinge einwirkt und damit in Folge einer raschen Erhöhung des Zitronensäurespiegels Zucker- und Aminosäurestoffwechsel der Schädlinge unterbindet, führt die erfindungsgemäße Verwendung sehr schnell und ohne Wiederholungsmöglichkeit (Reamination) zum Tode. Bei den im natürlichen Zitronensäure-Zyklus in äußerst geringen Mengen anfallenden Auf- und Abbauprodukten von Zitronensäure in den Schädlingskörpem ist bereits ein geringfügiger Anstieg des Gehaltes an Zitronensäure absolut und zuverlässig insektizid und führt bei allen Schädlingen zuverlässig zum Absterben. Die Kombination mit Glycerin verstärkt diese Wirkung überraschenderweise sehr stark, was zu einer überlegenen Wirksamkeit der erfindungsgemäßen Verwendung, gegenüber alleiniger Verwendung von beispielsweise Zitronensäure, führt.

Erfindungsgemäß können beliebige Mischungen mindestens einer Säure mit Glycerin verwendet werden. Das Mischverhältnis kann dabei im Bereich von 0,01 bis 99,99 Gew.-Teile Säure zu 99,99 bis 0,01 Gew.-Teile Glycerin liegen. Bevorzugt werden 10 bis 80 Gew.-Teile Säure und 80 bis 10 Gew.-Teile Glycerin verwendet insbesondere bevorzugt ist die Verwendung von gleichen Teilen Säure und Glycerin.

Säure und Glycerin können direkt miteinander vermischt werden; es ist aber auch möglich ein geeignetes Lösungsmittel zuzusetzen. Dadurch kann die Mischung aus Säure und Glycerin vemebel-, spritz- oder sprühbar verwendet werden. Geeignete Lösungsmittel sind Wasser und 1,2-Propylendiol. Durch Zugabe von Verdickungsmitteln kann die Mischung aus Säure und Glycerin auch so eingestellt werden, daß eine streichfähige Mischung erhalten wird. Besonders bevorzugt ist es, die Mischung so zu verdicken, daß ein Gel mit einer Viskosität von 30 bis 1.000.000 mPas erhalten wird.

Bevorzugte Verdickungsmittel sind Agar-Agar, Carrageen, Traganth, Xanthan Gum, Cellulose- und Kemmehlether, Polyacryl- und Polymethacrylverbindungen, Polycarbonsäure, Polykieselsäure und Tonmineralien, wie Montmorillonite, Zeolithe und Kieselsäuren.

Insbesondere bevorzugt ist die Verwendung von Säure und Glycerin in Form von Xerogelen. Dabei wird die Mischung aus Säure und Glycerin in einem geeigneten Lösungsmittel gelöst und mit einem Verdicker versetzt. Das so erhaltene Lyogel kann durch Versprühen, Aufstreichen oder Verspritzen ausgebracht werden. Durch das Entweichen des Lösungsmittels entsteht ein ausgetrocknetes Material, das Xerogel. So kann die insektizide Mischung einfach, einmalig auf zu behandelnde Flächen aufgebracht werden und an diesen Stellen lange die Wirkung beibehalten. Durch Aufnahme von Feuchtigkeit aus der Umgebungsatmosphäre wird stets eine emeute Quellung ausgelöst, was zu erneuter Wirksamkeit führt. Diese Verwendungsart hat den Vorteil, daß die insektizide Mischung einfach ausgebracht werden kann, wobei auch schwierig zugängliche Stellen einfach erreicht werden können. Durch das Eintrocknen wird gleichzeitig sichergestellt, daß die insektizide Zusammensetzung auch fangfristig, beispielsweise in senkrecht stehenden Fugen, verbleibt und langanhaltende Wirkung zeigt.

Die Wirksamkeit der Mischung aus Säure und Glycerin kann durch Zusatz mindestens eines anionischen Tensids überraschenderweise weiter gesteigert werden.

Geeignete anionische Tenside sind beispielsweise Seifen, Alkylbenzolsulfonate, Alkansulfonate, Methylestersufonate, α-Olefinsulfonate, Alkylsulfate und Alkylethersulfate. Bevorzugt ist dabei die Verwendung von Natriumlaurylsulfat.

Die Menge des verwendeten anionischen Tensids ist nicht beschränkt. Bevorzugt werden jedoch anionisches Tensid und Zitronensäure/Glycerin im Gewichtsverhältnis von 1 : 100 bis 100 : 1, insbesondere bevorzugt im Gewichtsverhältnis von 10 : 90 bis 90 : 10, wobei der Bereich von 20 : 80 bis 80 : 20 am stärksten bevorzugt ist, eingesetzt.

Die nachstehenden Beispiele erläutern die Erfindung:
1. **Beispiele für Formulierungen für die erfindungsgemäße Verwendung der Zitronensäure (TP)**

| | | |
|---|---|---|
| (I) | 0,10 Gew.-% | Zitronensäure, 7-Hydrat |
| | 0,10 Gew.-% | Glycerin |
| | 99,80 Gew.-% | Wasser |
| | | |
| (II) | 0,08 Gew.-% | Zitronensäure, 7-Hydrat |
| | 0,08 Gew.-% | Glycerin |
| | 0,04 Gew.-% | Na-Laurylsulfat |
| | 99,80 Gew.-% | Wasser |
| | | |
| (III) | 1,00 Gew.-% | Zitronensäure, 7-Hydrat |
| | 1,00 Gew.-% | Glycerin |
| | 98,00 Gew.-% | Wasser |
| | | |
| (IV) | 0,80 Gew.-% | Zitronensäure, 7-Hydrat |
| | 0,80 Gew.-% | Glycerin |
| | 0,40 Gew.-% | Na-Laurylsulfat |
| | 98,00 Gew.-% | Wasser |
| | | |
| (V) | 20,00 Gew.-% | Zitronensäure |
| | 10,00 Gew.-% | Wasser |
| | 0,20 Gew.-% | Carbopol |
| | 9,80 Gew.-% | Na-Laurylsulfat |
| | 60,00 Gew.-% | Glycerin |

### 1.A. Eingesetzte Referenzprodukte (REF)

| | | |
|---|---|---|
| (I) | 0,20 Gew.-% | Methomyl (Carbamat) |
| | 99,80 Gew.-% | Wasser |
| | | |
| (II) | 0,50 Gew.-% | Chlorpyriphos |
| | 0,37 Gew.-% | Neopynamin |
| | 1,95 Gew.-% | Methoxychlor |
| | 97,18 Gew.-% | Wasser |
| | | |
| (III) | 20,00 Gew.-% | Deltamethrin |
| | 10,00 Gew.-% | Wasser |
| | 0,20 Gew.-% | Carbopol |
| | 69,80 Gew.-% | 1,2,3-Propantriol |
| | | |
| (IV) | 0,20 Gew.-% | Zitronensäure, 7-Hydrat |
| | 99,80 Gew.-% | Wasser |
| | | |
| (V) | 2,00 Gew.-% | Zitronensäure, 7 Hydrat |
| | 98,00 Gew.-% | Wasser |

### 2. Anwendungsbeispiele

**2.a.** TP (I) und TP (II) wurden mit REF (I) und REF (IV) verglichen. Dazu wurden jeweils 20 stark mit Spinnenmilben ( Panonynchus ulmi) befallene Begonien mit einer Menge von jeweils 20 ml (jeweils 1 ml pro Pflanze) vollflächig nass mit den entsprechenden Produkten benetzt.
Ergebnisse: Sowohl bei TP (I) als auch bei TP (II) sowie bei Anwendung von REF (I) waren alle Pflanzen bei den Bonituren nach 1, 4, 7 und 14 Tagen völlig befallsfrei. Bei REF (IV) waren die Bonituren nur nach einem Tag befallsfrei. Nach 4 Tagen wurden 10 %, nach 7 Tagen 50 % und nach 100 Tagen 100 % des Ausgangsbefalls gezählt.
Die Auswertung der Phytotoxizität der Produkte nach der Anwendung (Blattrandverfärbungen, Nekrosen etc.) nach 14 Tagen zeigte bei TP (I) und TP (II) auf der 5teiligen Skala den Wert 0 (keine sichtbaren Veränderungen), bei REF (I) wurde der Wert 1 (geringe Verfärbung an Blättern bzw. Blüten) bestimmt.
Hiermit zeigt sich, daß die erfindungsgemäßen Kombinationen die gleiche Wirkung wie das Marktprodukt REF (I) erbringen, ohne allerdings dessen Risiken auf die Gesundheit von Anwendern und Pflanzen aufzuweisen. Dem Referenzprodukt (IV) auf Basis eines isolierten Wirkstoffes waren die Kombinationen um ca. 50 % überlegen.

**2.b.** Dieselben Produkte wie im Test 2.a. wurden in vier Glashäusem an je 200 Gemüsepflanzen, die stark mit Weißer Fliege (Aleyrodes proletella) und Blattläusen (Aphididae) verschiedener Art befallen waren, getestet.
Ausbringmenge war jeweils 200 ml, also 1 ml je Pflanze, voilfächig nass.
Ergebnisse: Sowohl bei TP (I) und TP (II) als auch bei Anwendung von REF (I) waren alle Pflanzen in den Bonituren nach 1, 4, 7 und 14 Tagen befallsfrei, während bei Anwendung von REF (IV) die Bonituren nur nach 1 und 4 Tagen befallsfrei geblieben waren. Nach 7 Tagen wurden 30 % des Ausgangsbefalls, nach 14 Tagen 100 % des Ausgangsbefalls gezielt.

**2.c.** TP (III) und TP (IV) wurden mengengleich zu REF (II) und REF (V) im Laborversuch als Sprühmittel zur Bekämpfung folgender Schädlinge (Adulte und Metamorphosen) vergleichend eingesetzt.
A) Musca domestica - Gemeine Stubenfliege
B) Blatella germanica - Deutsche Küchenschabe
C) Lasius niger - Schwarze Gartenameise
D) Ixodes rizinus - Holzbock (Zecke)
E) Tineola bisselliella - Kleidermotte

Für die Versuche wurden von den fliegenden Schädlingen A) und E) jeweils 30 Exemplare in gazeverhängte Käfige mit den Maßen 1x1x1 m verbracht und jeweils mit 1 ml der oben genannten Produkte besprüht. Ausgewertet wurde nach jeweils 1, 5,10 und 20 Minuten auf dem Boden liegende, flugunfähige Tiere und nach 24 Stunden die Mortalitäts-, bzw. Reanimationsrate (Wiedererholung).

| **Ergebnisse in Prozent:** | | | | | | | | | | |
|---|---|---|---|---|---|---|---|---|---|---|
| Fliegen | | | | | | Motten | | | | |
| | 1 | 5 | 10 | 20 Min. | 24 Std. | 1 | 5 | 10 | 20 Min. | 24 Std. |
| TP (III) | 100 | 100 | 100 | 100 | 100 | 100 | 100 | 100 | 100 | 100 |
| TP (IV) | 100 | 100 | 100 | 100 | 100 | 100 | 100 | 100 | 100 | 100 |
| REF (II) | 20 | 80 | 100 | 100 | 95 | 100 | 100 | 100 | 100 | 100 |
| REF (V) | 10 | 70 | 100 | 100 | 100 | 90 | 100 | 100 | 100 | 100 |

Von den kriechenden Schädlingen wurden ebenfalls jeweils 30 Exemplare gemischter Metamorphosen in Wannen mit den Maßen 1x1x1 m verbracht und mit jeweils 1 ml) besprüht - Bonitur wie vorher.

| TP (III) | | | | | | REF (V) | | | | |
|---|---|---|---|---|---|---|---|---|---|---|
| Schaben | 1 | 5 | 10 | 20 Min. | 24 Std. | 1 | 5 | 10 | 20 Min. | 24 Std. |
| | 100 | 100 | 100 | 100 | 100 | 60 | 90 | 100 | 100 | 100 |
| Ameisen | 1 | 5 | 10 | 20 Min. | 24 Std. | 1 | 5 | 10 | 20 Min. | 24 Std. |
| | 85 | 100 | 100 | 100 | 100 | 10 | 35 | 70 | 100 | 100 |
| Zecken | 1 | 5 | 10 | 20 Min. | 24 Std. | 1 | 5 | 10 | 20 Min. | 24 Std. |
| | 40 | 60 | 100 | 100 | 100 | 0 | 0 | 20 | 40 | 100 |

| TP (IV) | | | | | | REF (II) | | | | |
|---|---|---|---|---|---|---|---|---|---|---|
| Schaben | 1 | 5 | 10 | 20 Min. | 24 Std. | 1 | 5 | 10 | 20 Min. | 24 Std. |
| | 100 | 100 | 100 | 100 | 100 | 65 | 95 | 100 | 100 | 100 |
| Ameisen | 1 | 5 | 10 | 20 Min. | 24 Std. | 1 | 5 | 10 | 20 Min. | 24 Std. |
| | 100 | 100 | 100 | 100 | 100 | 10 | 30 | 85 | 100 | 100 |
| Zecken | 1 | 5 | 10 | 20 Min. | 24 Std. | 1 | 5 | 10 | 20 Min. | 24 Std. |
| | 55 | 100 | 100 | 100 | 100 | 0 | 25 | 60 | 40 | 100 |

Die Auswertung nach der jeweils abgelaufenen Zeit erfasste ausschließlich auf dem Rücken liegender Tiere, die unter der Lupe keine Bein- oder Tentakelbewegungen zeigten.

Auch diese Versuchsanordnungen zeigen, daß bei Anwendung des erfindungsgemäßen Schädlingsbekämpfungsmittels überraschenderweise nicht nur eine vergleichbare, erwartete Wirkung, sondern eine dem marktüblichen Vergleichsprodukt (REF II) sogar überlegene Wirkung erzielt werden konnte.

Die Kombinationsprodukte TP(III) und TP (IV) sind in der Wirkung insbesondere gegenüber REF (V) überlegen. Dabei weist TP (III) eine auffallend gute Wirksamkeit bei Zekken auf.

2.d. in einem Langzeitversuch über 6 Monate hinweg wurde die Wirksamkeit eines gelösten Daueraufstriches zur Schabenbekämpfung im Labor vergleichend TP (V) zu REF (III) vorgenommen. Eine flache Wanne aus Nitrosta mit den Maßen L=50 cm, B=30 cm, H=2 cm, wurde rundum an den 2 cm hohen Seitenflächen und auf dem Boden mit jeweils 2 ml TP (V) und 2 ml REF (III) bestrichen und in jeweils 1 große Acrylglaswanne 1x1x1 m gestellt. In die behandelten Nitrostahlwannen wurden dann einmal pro Monat in insgesamt sechs aufeinanderfolgenden Monaten jeweils 10 gemischte Exemplare (Adulte und Nymphen) von Blatella germanica - Deutsche Küchenschabe
Periplaneta americana - Amerikanische Küchenschabe und
Blatta orientalis - Orientalische Küchenschabe eingesetzt, wobei diese dann nach Produktkontakt in die unbehandelten Acrylwannen überwechselten, wonach dann die behandelte Wanne entnommen und für die weiteren Versuche verwahrt wurde.

Die kontaminierten Schaben wurden in der unbehandelten Wanne mit Wasser und Futter versorgt und beobachtet. Nach jeweils 5, 10, 30 Minuten und 24 Stunden wurden die auf dem Rücken liegenden Tiere ausgezählt und nach weiteren 24 Stunden Beobachtungsdauer die Mortalitätsrate in Prozent der Gesamtzahl eingesetzter Schaben erhoben.

### Ergebnisse in Prozent Mortalität:

| **Biatella Germanica** | | | | | | | | | | |
|---|---|---|---|---|---|---|---|---|---|---|
| | TP (V) | | | | | REF (III) | | | | |
| | Minuten | | | Stunden | | Minuten | | | Stunden | |
| | 5 | 10 | 30 | 24 | 48 | 5 | 10 | 30 | 24 | 48 |
| 1. Monat | 100 | 100 | 100 | 100 | 100 | 100 | 100 | 100 | 100 | 100 |
| 2. Monat | 100 | 100 | 100 | 100 | 100 | 90 | 100 | 100 | 100 | 100 |
| 3. Monat | 100 | 100 | 100 | 100 | 100 | 85 | 100 | 100 | 100 | 100 |
| 4. Monat | 100 | 100 | 100 | 100 | 100 | 60 | 80 | 100 | 100 | 100 |
| 5. Monat | 100 | 100 | 100 | 100 | 100 | 20 | 65 | 80 | 90 | 100 |
| 6 Monat | 100 | 100 | 100 | 100 | 100 | 0 | 15 | 40 | 60 | 80 |

| **Periplaneta Americana** | | | | | | | | | | |
|---|---|---|---|---|---|---|---|---|---|---|
| | TP (V) | | | | | REF (III) | | | | |
| | Minuten | | | Stunden | | Minuten | | | Stunden | |
| | 5 | 10 | 30 | 24 | 48 | 5 | 10 | 30 | 24 | 48 |
| 1. Monat | 100 | 100 | 100 | 100 | 100 | 60 | 100 | 100 | 100 | 100 |
| 2. Monat | 100 | 100 | 100 | 100 | 100 | 60 | 100 | 100 | 100 | 100 |
| 3. Monat | 100 | 100 | 100 | 100 | 100 | 45 | 85 | 95 | 100 | 100 |
| 4. Monat | 100 | 100 | 100 | 100 | 100 | 20 | 50 | 80 | 100 | 100 |
| 5. Monat | 100 | 100 | 100 | 100 | 100 | 0 | 35 | 60 | 90 | 100 |
| 6 Monat | 100 | 100 | 100 | 100 | 100 | 0 | 30 | 60 | 75 | 90 |

| **Blatta Orientalis** | | | | | | | | | | |
|---|---|---|---|---|---|---|---|---|---|---|
| | TP (V) | | | | | REF(III) | | | | |
| | Minuten | | | Stunden | | Minuten | | | Stunden | |
| | 5 | 10 | 30 | 24 | 48 | 5 | 10 | 30 | 24 | 48 |
| 1. Monat | 100 | 100 | 100 | 100 | 100 | 100 | 100 | 100 | 100 | 100 |
| 2. Monat | 100 | 100 | 100 | 100 | 100 | 100 | 100 | 100 | 100 | 100 |
| 3. Monat | 100 | 100 | 100 | 100 | 100 | 90 | 100 | 100 | 100 | 100 |
| 4. Monat | 100 | 100 | 100 | 100 | 100 | 90 | 90 | 100 | 100 | 100 |
| 5. Monat | 100 | 100 | 100 | 100 | 100 | 60 | 80 | 90 | 100 | 100 |
| 6 Monat | 100 | 100 | 100 | 100 | 100 | 45 | 65 | 90 | 100 | 100 |

Dieser Langzeitversuch zeigt die überraschend gute und langandauemde Wirkung der erfindungsgemäßen Verwendung. Insbesondere in seiner 100%igen Tilgungsrate von gemischten Arten und Stadien von Schaben (Blattodea) auch noch nach einer Lagerzeit von 6 Monaten im Vergleich zu einem pyrethroidhaltigen gelösten Aufstrichmittel.

**2.e.** Zur Erzielung einer genügenden Langzeitwirkung, d.h. einer möglichst 100%igen Tilgungsrate des vorhandenen Schädlingsbefall ist, neben einer fanganhaltenden Tötungsrate ein möglichst geringes Abstoßungspotential (Repellenz) erforderlich, um zu gewährleisten, daß alle Schädlinge nach und nach mit vorhandenen Sprüh-, Streichoder Stäubungsbelägen in Kontakt kommen und damit zuverlässig vernichtet werden.

Zur Austestung dieses Repellenzpotentials wurden in den Acrylwannen mit den Maßen 1x1x1 m an den Seitenwänden über den Boden verlaufend mittig 3 cm breite Produktstreifen angebracht, auf einer Seite der Wanne Wasser und Futter aufgestellt, auf der anderen Seite jeweils 10 Testtiere eingesetzt und beobachtet, ob die Schädlinge den Produktstreifen überschreiten würden, um an das Futter zu gelangen.

Getestet wurden Schaben der Art B. germanica und Ameisen der Art L. niger, gemischte Stadien, vergleichend TP (III), TP (IV) und TP (V)) zu REF (I), REF (II) und REF (III).

### Ergebnisse:

Überraschenderweise zeigten die TESTPRODUKTE (III), (IV) und (V) überhaupt keine Anzeichen von Repellenz. Alle Testtiere überschritten rasch und zielstrebig die Produktbeläge, um an das Futter zu gelangen. Dies dauerte im Mittel aller 20 Tests (je 5 Versuche pro Testprodukt) zwei Minuten.

Von den Referenzprodukten zeigte die geringste Repellenz REF (I), hier wurden die Produktbeläge im Mittel der 5 Versuche nach 17 Minuten übertreten, bei REF (II) lag der Schnitt der Übertrittszeit bei 48 Stunden. REF (III) wies eine dermaßen hohe Repellenz auf, daß die Testtiere in keinem Fall die Produktbeläge innerhalb von 96 Stunden überschritten, es ist daher als Langzeitbekämpfungsmittel völlig ungeeignet, da Schädlinge mit REF (III) behandelte Flächen konsequent meiden.

Erfindungsgemäß behandelte Flächen weisen absolut kein Abstoßungspotential (Repellenz) auf und werden von Schädlingen problemlos aufgesucht und diese dann nach Kontakt zuverlässig abgetötet. infolge der völlig fehlenden negativen Effekte des erfindungsgemäßen Schädlingsbekämpfungsmittels auf Menschen, Warmblüter (Haustiere und Vögel) und der nachgewiesenermaßen ausgezeichneten, völlig überraschend gefundenen Mortalität auf Schädlinge kann es immer und überall ohne Einschränkungen in der Schädlingsbekämpfung gefahrlos eingesetzt werden.

## Patentansprüche

1. Verwendung mindestens einer Säure des Zitronensäure-Kreislaufs in Kombination mit Glycerin zur Schädlingsbekämpfung.

2. Verwendung nach Anspruch 1, **dadurch gekennzeichnet, daß** als Säure Zitronensäure verwendet wird.

3. Verwendung nach Anspruch 1 oder 2, **dadurch gekennzeichnet, daß** zusätzlich ein geeigneter flüssiger Träger verwendet wird.

4. Verwendung nach mindestens einem der vorstehenden Ansprüche, **dadurch gekennzeichnet, daß** weiterhin mindestens ein anionisches Tensid verwendet wird.

5. Verwendung nach Anspruch 4, **dadurch gekennzeichnet, daß** das anionische Tensid Natriumlaurylsulfat ist..

6. Verwendung nach Anspruch 3, **dadurch gekennzeichnet, daß** der flüssige Träger Wasser, Alkohol oder 1,2-Propylenglykol, einzeln oder in Mischungen, ist.

7. Verwendung nach mindestens einem der vorstehenden Ansprüche, **dadurch gekennzeichnet, daß** zusätzlich ein geeignetes Verdickungsmittel verwendet wird, wobei die Viskosität der resultierenden Mischung im Bereich von 30 bis 1.000.000 mPas ist.

8. Verwendung nach mindestens einem der vorstehenden Ansprüche bei fliegenden, kriechenden, stechenden, beißenden und saugenden Schädlingen und Lästlingen.

## Claims

1. Use of at least one acid of the citric acid cycle in combination with glycerol for pest control.

2. Use according to claim 1 **characterized in that** the **acid used is citric acid.**

3. Use according to claim 1 or 2, **characterized in that** a suitable liquid carrier is used in addition.

4. Use according to at least one of the preceding claims, **characterized in that** at least one anionic surfactant is used in addition.

5. Use according to claim 4, **characterized in that** the anionic surfactant is sodium lauryl sulfate.

6. Use according to claim 3, **characterized in that** the liquid carrier is water, alcohol or 1,2-propylene glycol, alone or in mixtures.

7. Use according to at least one of the preceding claims, **characterized in that** a suitable thickening agent is additionally used, the viscosity of the resulting mixture ranging from 30 to 1,000,000 mPas.

8. Use according to at least one of the preceding claims in flying, creeping, stinging, biting and sucking pests and annoying animals.

## Revendications

1. Utilisation d'au moins un acide du cycle acide citrique en combinaison avec de la glycérine comme agent de lutte contre les parasites.

2. Utilisation selon la revendication 1, **caractérisée en ce que** l'acide utilisé est de l'acide citrique.

3. Utilisation selon la revendication 1 ou 2, **caractérisée en ce que** un support liquide adéquat est utilisé en supplément.

4. Utilisation selon au moins l'une quelconque des revendications précédentes, **caractérisée en ce que**, en outre, au moins un agent tensioactif anionique est utilisé.

5. Utilisation selon la revendication 4, **caractérisée en ce que** l'agent tensioactif anionique est du lauryl sulfate de sodium.

6. Utilisation selon la revendication 3, **caractérisée en ce que** le support liquide est de l'eau, de l'alcool ou du 1,2-propylèneglycol utilisé, seul ou en mélange.

7. Utilisation selon au moins l'une quelconque des revendications précédentes, **caractérisée en ce qu'**un agent épaississant adéquat est utilisé en supplément, moyennant quoi la viscosité du mélange qui en résulte se situe dans la plage comprise entre 30 et 1 000 000 mPa.s.

8. Utilisation selon au moins l'une quelconque des revendications précédentes pour les parasites ou animaux indésirables qui volent, rampent, piquent, mordent et sucent.
